# EUROPÄISCHE PATENTSCHRIFT

(11) **EP 3 322 608 B1**
(45) Veröffentlichungstag und Bekanntmachung des Hinweises auf die Patenterteilung: **10.04.2019**
(21) Anmeldenummer: 16728685.5
(22) Anmeldetag: 13.06.2016
(51) Int. Cl.: B60K 7/00, B60G 21/05

(54) **LÄNGSLENKERVORRICHTUNG EINER ANTREIBBAREN VERBUNDLENKERACHSE**
LONGITUDINAL CONTROL ARM DEVICE OF A DRIVABLE SEMI-INDEPENDENT SUSPENSION
DISPOSITIF À BRAS OSCILLANT D'UN ESSIEU À POUTRE DE TORSION POUVANT ÊTRE ENTRAÎNÉ

(30) Priorität: 16.07.2015 DE 102015213355
(43) Veröffentlichungstag der Anmeldung: 23.05.2018
(73) Patentinhaber: ZF Friedrichshafen AG, 88046 Friedrichshafen (DE)
(72) Erfinder: HOLTHEIDE, Josef, 49434 Neuenkirchen (DE); NORDLOH, Alfons, 49429 Visbek (DE); WULF, Markus, 32479 Hille (DE); BEYER, Michael, 32457 Porta Westfalica (DE); KALLASS, Felix, 49084 Osnabrück (DE)
(86) Internationale Anmeldenummer: PCT/EP2016/063425
(87) Internationale Veröffentlichungsnummer: WO 2017/008966

(56) Entgegenhaltungen:
- EP-A1- 2 815 905
- EP-A1- 2 818 350
- DE-A1-102011 005 616
- DE-A1-102011 005 625

## Beschreibung

Die Erfindung betrifft eine Längslenkervorrichtung einer antreibbaren Verbundlenkerachse gemäß der im Oberbegriff des Patentanspruches 1 näher definierten Art.

Aus der Praxis ist eine sogenannte antreibbare Verbundlenkerachse bzw. ein Electric Twist Beam (eTB) bekannt, bei der ein elektrischer PKW-Antrieb in eine Verbundlenker-Hinterachse integriert ist. Dabei weist eine eTB jeweils am linken und rechten Rad eine kompakte Einheit bzw. einen Antriebsstrang auf, der ein Getriebe und einen Elektromotor umfasst. Der Antriebsstrang ist jeweils in einem Gehäuse angeordnet, das wiederum Teil eines Längslenkers darstellt. Die beiden jeweils fahrzeugaußenseitig angeordneten Längslenker sind über ein im Wesentlichen in Fahrzeugquerrichtung verlaufendes Querprofil miteinander verbunden sowie im Bereich von Hauptlagern karosserieseitig anbindbar. Des Weiteren sind die Längslenker im Einbauzustand über Feder- und Dämpfereinheiten zusätzlich mit einer Fahrzeugkarosserie gekoppelt. Mit den zwei separaten Antriebssträngen ist unter anderem eine gezielte, radindividuelle Drehmomentverteilung, das sogenannte Torque-Vectoring umsetzbar.

Des Weiteren geht aus der DE 10 2011 005 625 A1 eine Antriebsvorrichtung zum Antreiben eines Rades einer Verbundlenkerachse für ein elektrisch antreibbares Fahrzeug hervor, die eine elektrische Maschine und ein in Kraftflussrichtung im Zugbetrieb betrachtet abtriebsseitig der elektrischen Maschine geschaltetes Getriebe umfasst. Das Gehäuse der elektrischen Maschine oder das Gehäuse des Getriebes sind direkt mit dem Längslenker der Verbundlenkerachse verschraubt, als mehrteiliges Schweißbauteil in den Längslenker integriert oder mit dem Längslenker einteilig ausgeführt. Zusätzlich können die elektrische Maschine und das Getriebe ein gemeinsames Gehäuse aufweisen.

Einteilig mit dem Längslenker ausgeführte Gehäuse der elektrischen Maschine und/oder des Getriebes stehen dem Bestreben entgegen, das Getriebe und/oder die elektrische Maschine einer eTB als vormontierbares Modul auszuführen, das oder die während einer Endmontage auf einfache und kostengünstige Art und Weise mit dem Längslenker verbindbar sind.

Im Unterschied hierzu sind mit einem Längslenker über Verschraubungen verbundene Gehäuse des Getriebes und/oder der elektrischen Maschine unerwünscht, über die Reifenkräfte in Richtung der Fahrzeugkarosserie weiterzuleiten sind. Dies resultiert aus der Tatsache, dass während eines Fahrbetriebes eines mit einer eTB ausgeführten Fahrzeuges Schraubverbindungen zwischen einem Gehäuse, eines Getriebes und/oder einer elektrischen Maschine und einem Längslenker einer eTB wechselnden Belastungen ausgesetzt sind, die eine Dichteinrichtung im Bereich der Trennfuge zwischen dem Gehäuse und dem Längslenker in unerwünschtem Umfang belasten. Um eine Dichtwirkung dauerhaft gewährleisten zu können, ist in diesem Bereich ein hoher Dichtaufwand vorzusehen, der jedoch die Herstellung einer eTB insgesamt verteuert.

Der vorliegenden Erfindung liegt daher die Aufgabe zugrunde, eine kostengünstige Längslenkervorrichtung einer antreibbaren Verbundlenkerachse zur Verfügung zu stellen, die durch eine hohe Lebensdauer gekennzeichnet ist.

Erfindungsgemäß wird diese Aufgabe mit einer Längslenkervorrichtung mit den Merkmalen des Patentanspruches 1 gelöst.

Die erfindungsgemäße Längslenkervorrichtung einer antreibbaren Verbundlenkerachse bzw. einer eTB weist ein Gehäuse auf, innerhalb dem ein Antriebsstrang anordenbar ist und das mit einem Längslenker verbunden ist.

Erfindungsgemäß weist das Gehäuse auf einer in Einbaulage in einem Fahrzeug einem Rad zugewandten Seite eine einteilig mit einem mittleren Gehäusebereich ausgebildete und eine den Antriebsstrang zumindest teilweise aufnehmenden Gehäuseinnenraum begrenzende Seitenwand auf, während der Gehäuseinnenraum auf der dem Rad abgewandten Seite über wenigstens ein lösbar mit dem mittleren Gehäusebereich verbindbares Deckelelement begrenzt ist.

Durch die radseitig einteilige Ausführung des den Antriebsstrang zumindest teilweise aufnehmenden Gehäuses der Längslenkervorrichtung wird auf einfache Art und Weise vermieden, dass im Betrieb eines Fahrzeuges auftretende Reifenkräfte von einer Radachse über eine Verschraubung zwischen einem Gehäuseteil und einem Längslenker in Richtung einer Fahrzeugkarosserie zu führen sind. Zusätzlich ist in diesem wechselnden Belastungen ausgesetzten Bereich ein Dichtaufwand im Vergleich zu den aus dem Stand der Technik bekannten Verbundlenkersystemen auf ein Minimum reduziert, womit die erfindungsgemäße Längslenkervorrichtung und eine diese aufweisende antreibbare Verbundlenkerachse kostengünstig herstellbar sind.

Des Weiteren besteht durch die erfindungsgemäße Ausführung der Längslenkervorrichtung auf der einem Rad abgewandten Seite mit dem wenigstens einen lösbar mit dem mittleren Gehäusebereich verbindbaren Deckelelement mit geringem Aufwand die Möglichkeit, den Antriebsstrang zumindest teilweise als vormontierbare Moduleinheit auszuführen und während einer Montage einer antreibbaren Verbundlenkerachse mit geringem Montageaufwand in den Gehäuseinnenraum der erfindungsgemäßen Längslenkervorrichtung einzusetzen und mit der Längslenkervorrichtung zu verbinden.

Zusätzlich wird durch die radseitig einteilige Ausführung des Gehäuses der erfindungsgemäßen Längslenkervorrichtung der Antriebsstrang mit geringem Aufwand entlastet, da die Reifenkräfte nur zu einem geringen Anteil in die im Gehäuseinnenraum angeordneten Bauteile des Antriebsstranges eingeleitet werden, wodurch zusätzlich durch fahrdynamische Einflüsse verursachte Akustiklaufgeräusche im angestrebten Umfang reduziert werden.

Sind der mittlere Gehäusebereich und der Längslenker einstückig ausgebildet, sind Reifenkräfte wiederum über ein einteiliges und mit geringem konstruktivem Aufwand belastungsgerecht ausführbares Bauteil im Bereich einer Fahrzeugkarosserie abstützbar.

Ist das Deckelelement als eine Zwischenplatte mit einem Aufnahmebereich ausgebildet, in dem zumindest ein Teil einer Getriebeeinrichtung des Antriebsstranges anordenbar ist, ist der Antriebsstrang vollständig als vormontierbares Bauteil herstellbar und während einer Endmontage einer antreibbaren Verbundlenkerachse mit geringem Aufwand in die Längslenkervorrichtung integrierbar.

Bei einer ebenfalls durch einen geringen Montageaufwand gekennzeichneten Ausführungsform der erfindungsgemäßen Längslenkervorrichtung ist auf der dem mittleren Gehäusebereich abgewandten Seite des Deckelelementes ein mit dem Deckelelement lösbar verbundenes weiteres Deckelelement vorgesehen, in dem zumindest teilweise eine elektrische Maschine des Antriebsstranges anordenbar ist.

Diese Ausführungsform bietet die Möglichkeit, das weitere Deckelelement und die elektrische Maschine als ein vormontierbares Teilmodul und das Deckelelement mit der Getriebeeinrichtung als weiteres vormontierbares Teilmodul auszuführen, die beispielsweise vor einer Endmontage einer antreibbaren Verbundlenkerachse vormontiert und mit dem mittleren Gehäusebereich verbunden werden.

Weist der Längslenker eine Aufnahme auf, in dessen Bereich der Längslenker mit einem Querprofil einer Verbundlenkerachse verbindbar ist, ist eine antreibbare Verbundlenkerachse wiederum mit geringem Aufwand montierbar.

Bei einer vorteilhaften Weiterbildung der erfindungsgemäßen Längslenkervorrichtung weist der Längslenker zur Verbindung mit dem Querprofil vorzugsweise drei Gewindebereiche auf, wobei zwei in Einbaulage des Längslenkers in einem Fahrzeug in Fahrzeughochrichtung zueinander beabstandet und im Wesentlichen wenigstens annähernd übereinander angeordnet sind, während der dritte Gewindebereich in Fahrzeuglängsrichtung von den beiden anderen beabstandet am Längslenker vorgesehen ist und in Fahrzeughochrichtung zwischen den beiden anderen Gewindebereichen angeordnet ist. Davon abweichend könnte der Längslenker auch vier oder fünf Gewindebereiche aufweisen.

Damit ist ein Querprofil wiederum mit geringem Aufwand mit der Längslenkervorrichtung verbindbar und im Bereich einer Fahrzeugseite in die Längslenkervorrichtung eingeleitete Radkräfte sind in gewünschtem Umfang über das Querprofil in Richtung der anderen Fahrzeugseite angeordneten Längslenkervorrichtung weiterleitbar. Ein mit der erfindungsgemäßen Längslenkervorrichtung ausgeführtes Fahrzeug ist dann auf einfache Art und Weise mit einem gewünschten Fahrverhalten darstellbar bzw. betreibbar.

Weist der Längslenker eine weitere Aufnahme auf, in dessen Bereich ein Hauptlager anordenbar ist, über das eine antreibbare Verbundlenkerachse in an sich bekannter Art und Weise an einer Fahrzeugachse anbindbar ist, ist eine Montage einer antreibbaren Verbundlenkerachse in ein Fahrzeug wiederum mit geringem Aufwand durchführbar.

Ist eine Verbindungseinrichtung mit einem Koppelbereich mit dem Längslenker und/oder mit dem mittleren Gehäusebereich sowie mit einem Verbindungsbereich ausgebildet, wobei im Verbindungsbereich eine Federeinrichtung und/oder eine Dämpfereinrichtung an der Verbindungseinrichtung anbindbar ist, ist die Verbindungseinrichtung als eigenes Bauteil ausführbar, dass während einer Montage der Längslenkervorrichtung mit dem Längslenker und/oder mit dem mittleren Gehäusebereich verbindbar ist und anschließend gemeinsam mit der Längslenkervorrichtung mit einem Querprofil in Wirkverbindung bringbar ist.

Wenn eine Ausgangswelle einer elektrischen Maschine des Antriebsstranges im Bereich des Deckelelementes mit einer Welle eines Planetengetriebes verbindbar und eine weitere Welle des Planetengetriebes durch eine Öffnung des Deckelelementes führbar und auf der der elektrischen Maschine abgewandten Seite des Deckelelementes mit einer Stirnradstufe der Getriebeeinrichtung verbindbar ist, ist eine antreibbare Verbundlenkerachse in gewünschtem Umfang mit einem zweistufigen Getriebe und einem Hochdrehzahlkonzept ausführbar, die die Verwendung einer für den Alltagseinsatz wirkungsgradoptimierten elektrischen Maschine ermöglichen, die hohe Leistungen bei gleichzeitig reduziertem Materialeinsatz bereitstellt. Mit einem solchen Antrieb sind bereits während eines Anfahrvorganges hohe Drehmomente im Bereich der Fahrzeugachse realisierbar und ein mit einer eine erfindungsgemäße Längslenkervorrichtung aufweisenden antreibbaren Verbundlenkerachse ausgeführtes Fahrzeug ist mit ansprechenden Fahrleistungen zur Verfügung stellbar.

Bei einer konstruktiv einfachen und kostengünstigen Ausführungsform der erfindungsgemäßen Längslenkervorrichtung ist zumindest eines der Stirnräder der Stirnradstufe in einer Lageraufnahme der Seitenwand lagerbar.

Eine Radwelle ist bei einer weiteren konstruktiv einfachen sowie bauraum- und kostengünstigen Ausführungsform der erfindungsgemäßen Längslenkervorrichtung durch die Seitenwand hindurch in den Gehäuseinnenraum vorkragend montierbar.

Bei weiteren vorteilhaften Ausführungsformen der erfindungsgemäßen Längslenkervorrichtung ist die Längslenkervorrichtung zumindest bereichsweise beispielsweise als Schmiede- und/oder Gussteil, insbesondere aus Aluminium, ausgebildet, wobei bei einer Ausführung der Längslenkervorrichtung als Schmiedeteil höhere Reifenkräfte über die Längslenkervorrichtung in Richtung der Fahrzeugkarosserie führbar sind, während als Gussteil ausgeführte Längslenkervorrichtungen auf einfache Art und Weise im Vergleich zu Schmiedeteilen mit höheren Bauteiltoleranzen herstellbar sind, wodurch eine Fertigung der Längslenkervorrichtung kostengünstiger ist.

Ist das weitere Deckelteil wenigstens annähernd topförmig ausgeführt, ist eine elektrische Maschine mit geringem Aufwand im weiteren Deckelteil anordenbar und als bauraumgünstiges, patronenförmiges und vorgefertigtes Modul am mittleren Gehäusebereich montierbar.

Dabei besteht auch die Möglichkeit, neben der elektrischen Maschine auch eine Leistungselektronik nebst einem Umrichter im weiteren Deckelelement anzuordnen.

Bei weiteren einfach montierbaren Ausführungsformen der erfindungsgemäßen Längslenkervorrichtung ist eine Feder- und/oder eine Dämpferaufnahme einteilig mit dem Längslenker und/oder dem mittleren Gehäusebereich und/oder dem Deckelelement und/oder dem weiteren Deckelelement ausgebildet.

Sowohl die in den Patentansprüchen angegebenen Merkmale als auch die in den nachfolgenden Ausführungsbeispielen der erfindungsgemäßen Längslenkervorrichtung angegebenen Merkmale sind jeweils für sich alleine oder in beliebiger Kombination miteinander geeignet, den erfindungsgemäßen Gegenstand weiterzubilden.

Weitere Vorteile und vorteilhafte Ausführungsformen der erfindungsgemäßen Längslenkervorrichtung ergeben sich aus den Patentansprüchen und den nachfolgend unter Bezugnahme auf die Zeichnung prinzipmäßig beschriebenen Ausführungsbeispiele, wobei in der Beschreibung der verschiedenen Ausführungsbeispiele zugunsten der Übersichtlichkeit für bau- und funktionsgleiche Bauteile dieselben Bezugszeichen verwendet werden.

Es zeigt:
Fig. 1 eine Explosionsdarstellung einer ersten Ausführungsform einer Längslenkervorrichtung in einer Ansicht von oben;
Fig. 2 die Längslenkervorrichtung gemäß Fig. 1 in einer Explosionsdarstellung in einer Ansicht von schräg oben;
Fig. 3 die Längslenkervorrichtung gemäß Fig. 1 in einer Seitenansicht;
Fig. 4 eine einer Radseite abgewandte Seite eines Längslenkers und eines damit einteilig ausgeführten mittleren Gehäusebereiches der Längslenkervorrichtung gemäß Fig. 1 in einer Alleindarstellung;
Fig. 5 eine radseitige Ansicht des Längslenkers und des mittleren Gehäusebereiches der Längslenkervorrichtung gemäß Fig.1;
Fig. 6 eine Draufsicht auf den Längslenker und den damit verbundenen mittleren Gehäusebereich gemäß Fig. 1;
Fig. 7 eine dreidimensionale Einzelansicht eines in einem Gehäuseinnenraum der Längslenkervorrichtung gemäß Fig. 1 anordenbaren Antriebsstranges;
Fig. 8 eine dreidimensionale Darstellung der Längslenkervorrichtung gemäß Fig. 1 mit einer Feder- und einer Dämpfereinheit in vollständig montiertem Zustand;
Fig. 9 eine erste Ausführung einer Verbindungseinrichtung, in deren Bereich eine Federeinrichtung am mittleren Gehäuseteil anbindbar ist;
Fig. 10 die Verbindungseinrichtung gemäß Fig. 9 in einer weiteren Ansicht;
Fig. 11 eine Einzeldarstellung einer zweiten Ausführungsform der Verbindungseinrichtung; und
Fig. 12 eine Fig. 8 entsprechende Darstellung einer weiteren Ausführungsform der erfindungsgemäßen Längslenkervorrichtung, bei der eine Feder- und eine Dämpfereinrichtung koaxial zueinander angeordnet sind.

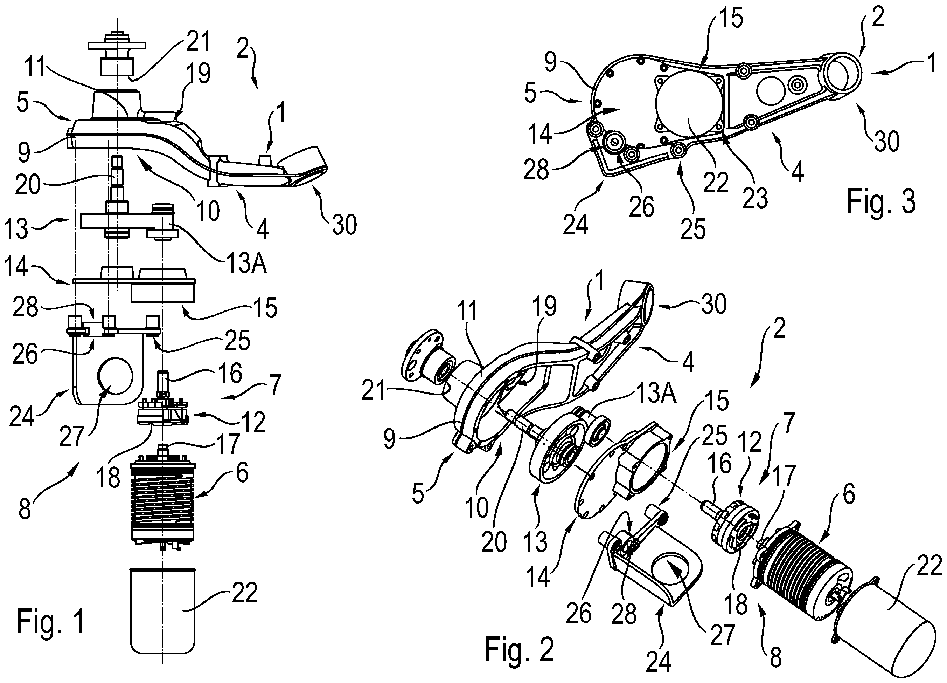

Fig. 1 und Fig. 2 zeigen eine erste Ausführungsform einer Längslenkervorrichtung 1 einer antreibbaren Verbundlenkerachse 2 jeweils in einer Explosionsdarstellung. Die antreibbare Verbundlenkerachse 2 weist in Einbaulage in einem Fahrzeug auf jeder Fahrzeugseite eine Längslenkervorrichtung 1 auf, die im Wesentlichen in Fahrzeuglängsrichtung x verlaufend verbaut sind und im Bereich von Aufnahmen 3 eines Längslenkers 4 vorzugsweise form- und kraftschlüssig mit einem sich in Fahrzeugquerrichtung erstreckenden Querprofil verbunden sind.

Zur Verbindung mit dem Querprofil weist der Längslenker 4 vorliegend drei Gewindebereiche 29A bis 29C auf, wovon zwei Gewindebereiche 29A, 29B in Einbaulage des Längslenkers 4 in einem Fahrzeug in Fahrzeughochrichtung y zueinander beabstandet und im Wesentlichen wenigstens annähernd übereinander angeordnet sind, während der dritte Gewindebereich 29C in Fahrzeuglängsrichtung x von den beiden anderen Gewindebereichen 29A und 29B beabstandet am Längslenker 4 vorgesehen ist und in Fahrzeughochrichtung y zwischen den beiden anderen Gewindebereichen 29A und 29B angeordnet ist. Zudem weist der Längslenker 4 eine weitere Aufnahme 30 auf, in dessen Bereich ein vorzugsweise als Gummilager ausgeführtes Hauptlager einsetzbar ist, über das die Verbundlenkerachse 2 in an sich bekannter Art und Weise im Bereich einer Fahrzeugkarosserie eines Fahrzeuges anbindbar ist.

Zusätzlich zeigt Fig. 3 eine Seitenansicht der Längslenkervorrichtung 1 gemäß Fig. 1 und Fig. 2 in einer Seitenansicht, wobei in Fig. 3 eine in Einbaulage der Längslenkervorrichtung 1 in einem Fahrzeug eine einem Fahrzeugrad abgewandte Seite A der Längslenkervorrichtung 1 darstellt. Der Längslenker 4 ist mit einem Gehäuse 5 ausgebildet, in dem ein eine elektrische Maschine 6 und eine Getriebeeinrichtung 7 umfassender Antriebsstrang 8 integriert ist.

Auf einer in Einbaulage in einem Fahrzeug einem Rad zugewandten Seite R weist das Gehäuse 5 eine einteilig mit einem mittleren Gehäusebereich 9 ausgebildete und einen den Antriebsstrang 8 zumindest teilweise aufnehmenden Gehäuseinnenraum 10 begrenzende Seitenwand 11 auf. Auf der dem Rad abgewandten Seite A ist der Gehäuseinnenraum 10 über ein lösbar mit dem mittleren Gehäusebereich 9 verbundenes Deckelelement 14 begrenzt.

Sowohl die elektrische Maschine 6 als auch die Getriebeeinrichtung 7, die vorliegend ein Planetengetriebe 12 und eine Stirnradstufe 13 umfasst, werden bei einer Montage der Längslenkervorrichtung 1 ausgehend von der der Radseite R abgewandten Seite A des Längslenkers 4 bzw. des mittleren Gehäusebereiches 9 in das Gehäuse 5 eingesetzt, da das Gehäuse 5 radseitig einteilig mit der Seitenwand 11 ausgebildet ist.

Der mittlere Gehäusebereich 9 und der Längslenker 4 sind einstückig ausgebildet. Darüber hinaus ist das Deckelelement 14 als eine Zwischenplatte mit einem Aufnahmebereich 15 ausgeführt. In dem Aufnahmebereich 15 ist vorliegend zumindest teilweise das Planetengetriebe 12 der Getriebeeinrichtung 7 des Antriebsstranges 8 angeordnet. Eine Welle 16 des Planetengetriebes 12, die ein Sonnenrad, ein Planetensteg oder ein Hohlrad sein kann, wird durch die durch das Deckelelement 14 gebildete Ebene hindurch geführt und steht auf der der Radseite R zugewandten Seite des Deckelelementes 14 mit der Stirnradstufe 13 in Wirkverbindung. Die Stirnradstufe 13 ist in montiertem Betriebszustand im Gehäuseinnenraum 10 auf der der Radseite R zugewandten Seite des Deckelelementes 14 positioniert. Zusätzlich ist eine Ausgangswelle 17 der elektrischen Maschine 6 des Antriebsstranges 8 im Bereich des Deckelelementes 14 mit einer Welle 18 des Planetengetriebes 12 verbindbar bzw. in montiertem Zustand verbunden, die wiederum ein Sonnenrad, ein Planetensteg oder ein Hohlrad sein kann. Ein Stirnrad 13A der Stirnradstufe 13 ist in einer Lageraufnahme 19 der Seitenwand 11 drehbar gelagert. Des Weiteren ist eine Radwelle 20 durch die Seitenwand 11 hindurch in den Gehäuseinnenraum 10 vorkragend montiert und über ein Radlager 21 drehbar im Bereich der Seitenwand 11 gelagert.

Auf der dem mittleren Gehäusebereich 9 abgewandten Seite des Deckelelementes 14 ist ein mit dem Deckelelement 14 lösbar verbundenes weiteres Deckelelement 22 vorgesehen, in dem die elektrische Maschine 6 angeordnet ist. Das weitere Deckelelement 22 ist vorliegend topfförmig bzw. patronenförmig gestaltet und bildet gemeinsam mit der elektrischen Maschine 6 ein vormontierbares Modul, das über Verschraubungen 23 in der in Fig. 3 dargestellten Art und Weise fest mit dem Deckelelement 14 und somit dem mittleren Gehäusebereich 9 in Wirkverbindung bringbar ist.

Eine Verbindungseinrichtung 24, mit der eine Federeinrichtung und eine Dämpfereinrichtung koppelbar sind, ist vorliegend am mittleren Gehäusebereich 9 über Verschraubungen 25 angebunden. Hierfür ist die Verbindungseinrichtung 24 mit einem Koppelbereich 26 mit dem mittleren Gehäusebereich 9 verbunden und mit Verbindungsbereichen 27, 28 ausgebildet, in deren Bereichen die Federeinrichtung bzw. die Dämpfereinrichtung an der Verbindungseinrichtung 24 anbindbar sind.

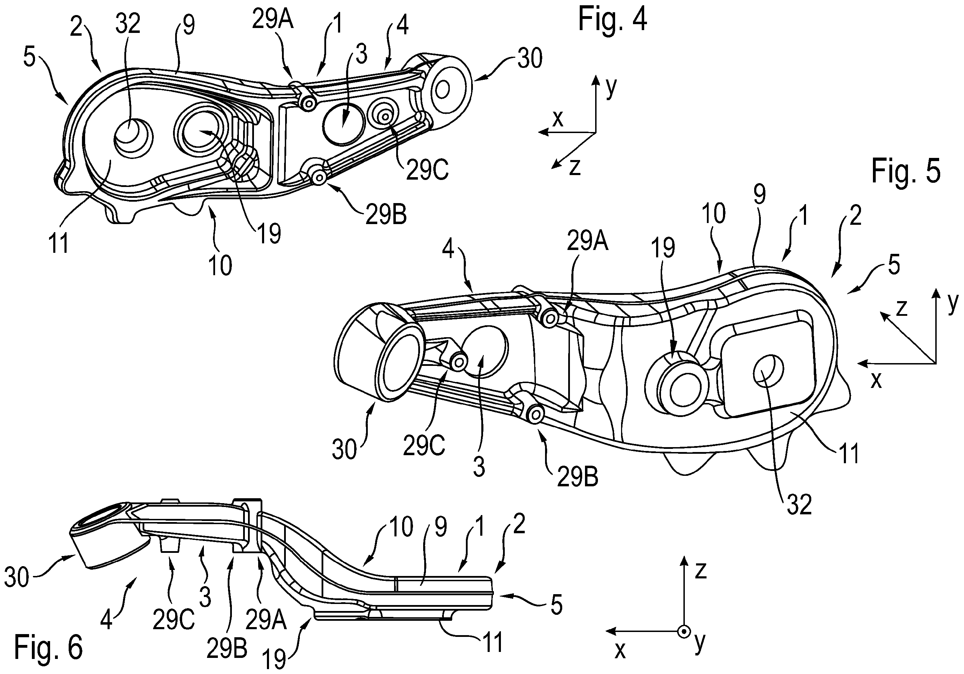

Fig. 4 bis Fig. 6 zeigen den Längslenker 4 und den mittleren Gehäusebereich 9 aus der Ansicht A, aus der Ansicht R und in einer Draufsicht. Aus den Darstellungen gemäß Fig. 4 und Fig. 5 geht hervor, dass die Seitenwand 11 mit einer Bohrung 32 ausgebildet ist, durch die die Radwelle 20 hindurch in den Gehäuseinnenraum 10 führbar ist. Zusätzlich zeigt Fig. 4 die Lageraufnahme 19, welche als eine zylindrische Vertiefung in der Seitenwand 11 ausgeführt ist. Die Gewindebereiche 29A bis 29C erstrecken sich in Fahrzeugquerrichtung z im Wesentlichen über die gesamte Breite des Längslenkers 4, wobei die Gewindebereiche 29A bis 29C vorliegend als Sacklochbohrungen mit Innengewinde ausgebildet sind, so dass bei Anlage des Querprofils am Längslenker 4 ein Schmutzeintritt in die Gewindebereiche 29A bis 29C mit geringem Aufwand verhindert werden kann.

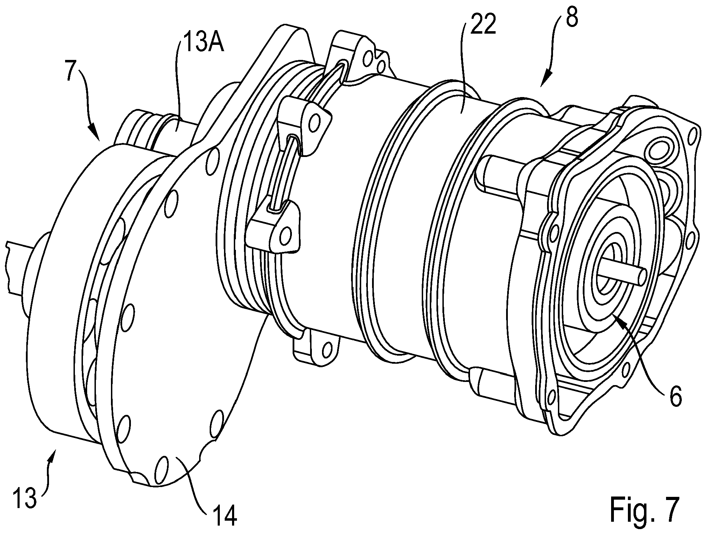

Fig. 7 zeigt wiederum die elektrische Maschine 6 und die Getriebeeinrichtung 7, wobei die elektrische Maschine 6 im topfartigen weiteren Deckelelement 22 angeordnet ist. Das weitere Deckelelement 22 ist fest mit dem Deckelelement 14 verbunden, in dessen Aufnahmebereich 15 in vorbeschriebenem Umfang das Planetengetriebe 12 angeordnet ist, während auf der der elektrischen Maschine 6 abgewandten Seite des Deckelelementes 14 die Stirnradstufe 13 montiert ist. Das Deckelelement 14, das weitere Deckelelement 22, die elektrische Maschine 6 und die Getriebeeinrichtung 7 bilden ein vormontierbares Modul, das während einer Endmontage der antreibbaren Verbundlenkerachse 2 mit geringem Aufwand am mittleren Gehäusebereich 9 über Verschraubungen befestigbar ist.

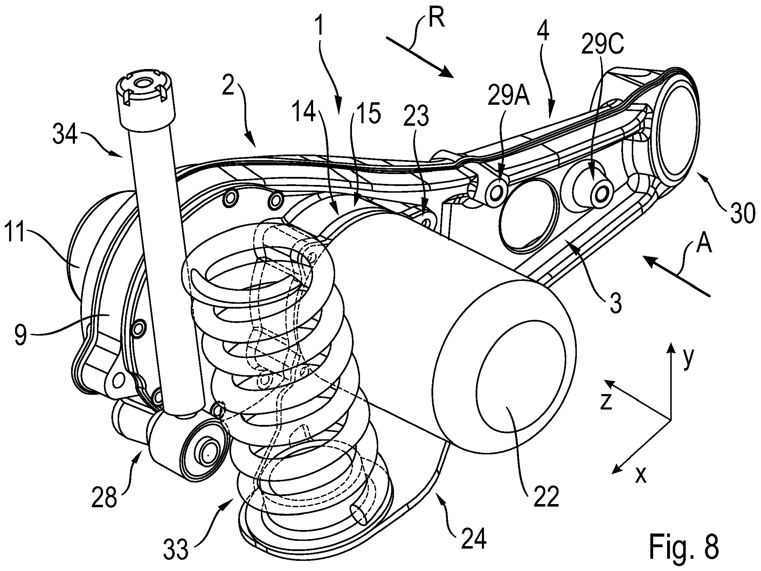

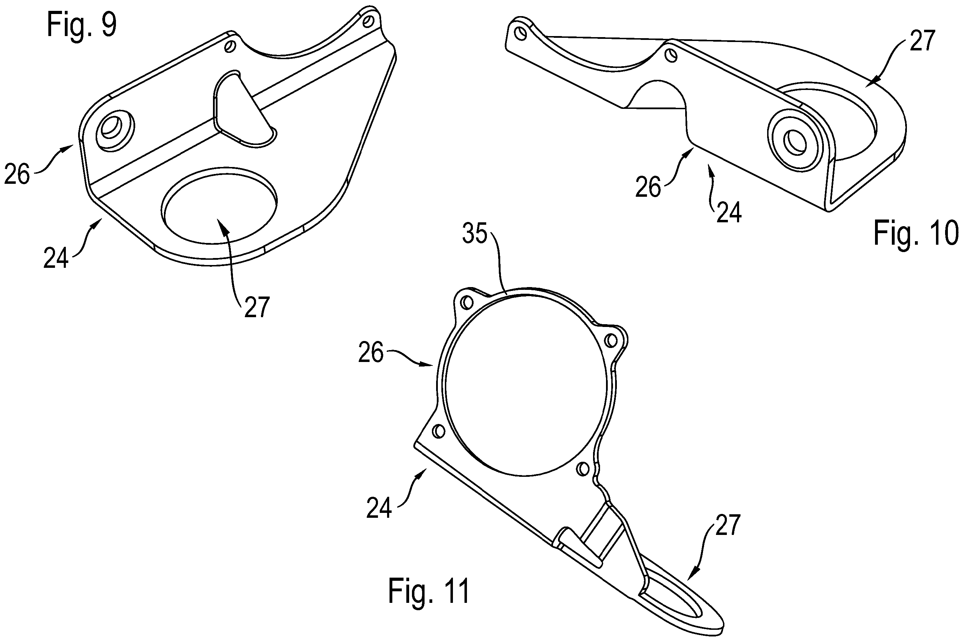

Fig. 8 zeigt eine dreidimensionale Ansicht der Längslenkervorrichtung 1 gemäß Fig. 1 mit einer an der Verbindungseinrichtung 24 befestigten Federeinrichtung 33 und einer am mittleren Gehäusebereich 9 angebundenen Dämpfereinrichtung 34, die im Wesentlichen in Fahrzeughochrichtung y verlaufend nebeneinander angeordnet sind. Des Weiteren zeigen Fig. 9 und Fig. 10 jeweils eine dreidimensionale Einzeldarstellung der Verbindungseinrichtung 24 aus zwei verschiedenen Ansichten, während in Fig. 11 eine weitere Ausführungsform der Verbindungseinrichtung 24 dargestellt ist. Die Verbindungseinrichtung gemäß Fig. 9 und gemäß Fig. 10 ist in montiertem Betriebszustand lediglich mit dem mittleren Gehäusebereich 9 verbunden, während die weitere Ausführungsform der Verbindungseinrichtung 24 gemäß Fig. 11 mit einem kreisförmigen Stegbereich 35 ausgebildet ist, der in montiertem Betriebszustand der Verbindungseinrichtung 24 zwischen dem Deckelelement 14 und dem weiteren Deckelelement 22 angeordnet und mit diesen fest verbunden ist.

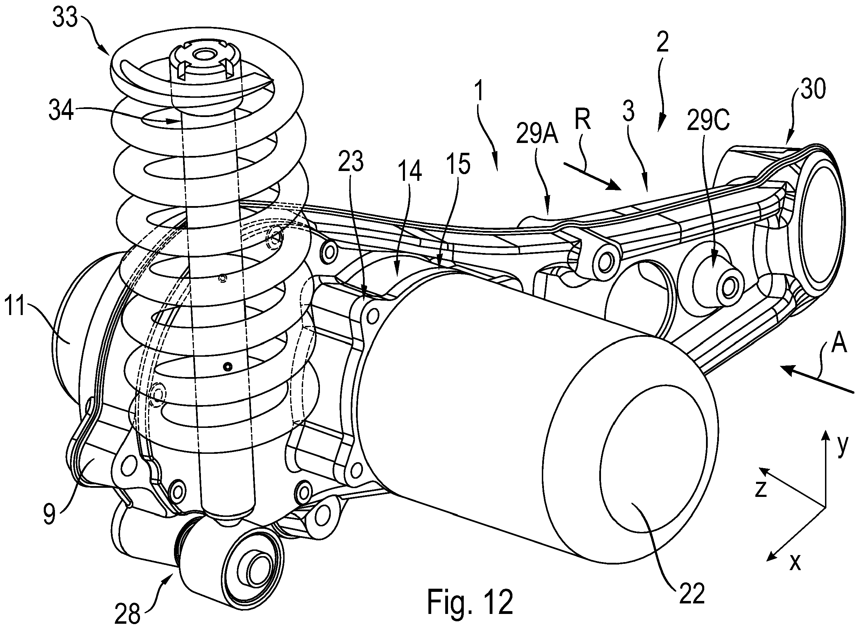

Fig. 12 zeigt eine Fig. 8 entsprechende Darstellung der Längslenkervorrichtung 1 gemäß Fig. 1, bei der die Verbindungseinrichtung 24 einstückig mit dem mittleren Gehäusebereich 9 ausgeführt ist und die Federeinrichtung 33 und die Dämpfereinrichtung 34 sind bauraumgünstig koaxial zueinander angeordnet.

Die Längslenkervorrichtung 1 bzw. dessen Baugruppen sind in Abhängigkeit des jeweils vorliegenden Anwendungsfalles als Gussteil, als Schmiedeteil, als Frästeil, als Biegeumformteil, als Tiefziehteil oder dergleichen ausführbar.

### Bezugszeichen

- 1: Längslenkervorrichtung
- 2: antreibbare Verbundlenkerachse
- 3: Aufnahme
- 4: Längslenker
- 5: Gehäuse
- 6: elektrische Maschine
- 7: Getriebeeinrichtung
- 8: Antriebsstrang
- 9: mittlerer Gehäusebereich
- 10: Gehäuseinnenraum
- 11: Seitenwand
- 12: Planetengetriebe
- 13: Stirnradstufe
- 13A: Stirnrad
- 14: Deckelelement
- 15: Aufnahmebereich
- 16: Welle des Planetengetriebes
- 17: Ausgangswelle der elektrischen Maschine
- 18: Welle des Planetengetriebes
- 19: Lageraufnahme
- 20: Radwelle
- 21: Radlager
- 22: weiteres Deckelelement
- 23: Verschraubung
- 24: Verbindungseinrichtung
- 25: Verschraubung
- 26: Koppelbereich
- 27,28: Verbindungsbereich
- 29A-29C: Gewindebereich
- 30: weitere Aufnahme
- 32: Bohrung
- 33: Federeinrichtung
- 34: Dämpfereinrichtung
- 35: ringförmiger Stegbereich
- A: einer Radseite abgewandte Seite der Längslenkervorrichtung
- R: Radseite der Längslenkervorrichtung
- x: Fahrzeuglängsrichtung
- y: Fahrzeughochrichtung
- z: Fahrzeugquerrichtung

## Patentansprüche

1. Längslenkervorrichtung (1) einer antreibbaren Verbundlenkerachse (2) mit einem Gehäuse (5), innerhalb dem ein Antriebsstrang (8) anordenbar ist und das mit einem Längslenker (4) verbunden ist, **dadurch gekennzeichnet, dass** das Gehäuse (5) auf einer in Einbaulage in einem Fahrzeug einem Rad zugewandten Seite (R) eine einteilig mit einem mittleren Gehäusebereich (9) ausgebildete und eine den Antriebsstrang (8) zumindest teilweise aufnehmenden Gehäuseinnenraum (10) begrenzende Seitenwand (11) aufweist, während der Gehäuseinnenraum (10) auf der dem Rad abgewandten Seite (A) über wenigstens ein lösbar mit dem mittleren Gehäusebereich (9) verbindbares Deckelelement (14) begrenzt ist.

2. Längslenkervorrichtung nach Anspruch 1, **dadurch gekennzeichnet, dass** der mittlere Gehäusebereich (9) und der Längslenker (4) einstückig ausgebildet sind.

3. Längslenkervorrichtung nach Anspruch 1 oder 2, **dadurch gekennzeichnet, dass** das Deckelelement (14) als eine Zwischenplatte mit einem Aufnahmebereich (15) ausgebildet ist, in dem zumindest ein Teil einer Getriebeeinrichtung (7) des Antriebsstranges (8) anordenbar ist.

4. Längslenkervorrichtung nach einem der Ansprüche 1 bis 3, **dadurch gekennzeichnet, dass** auf der dem mittleren Gehäusebereich (9) abgewandten Seite des Deckelelementes (14) ein mit dem Deckelement (14) lösbar verbundenes weiteres Deckelelement (22) vorgesehen ist, in dem zumindest teilweise eine elektrische Maschine (6) anordenbar ist.

5. Längslenkervorrichtung nach einem der Ansprüche 1 bis 4, **dadurch gekennzeichnet, dass** der Längslenker (4) eine Aufnahme aufweist, in dessen Bereich der Längslenker (4) mit einem Querprofil einer Verbundlenkerachse (2) verbindbar ist.

6. Längslenkervorrichtung nach einem der Ansprüche 1 bis 5, **dadurch gekennzeichnet, dass** der Längslenker (4) zur Verbindung mit dem Querprofil vorzugsweise drei Gewindebereiche (29A bis 29C) aufweist, wovon zwei der Gewindebereiche (29A, 29B) in Einbaulage des Längslenkers (4) in einem Fahrzeug in Fahrzeughochrichtung (y) zueinander beabstandet und im Wesentlichen wenigstens annähernd übereinander angeordnet sind, während der dritte Gewindebereich (29C) in Fahrzeuglängsrichtung (x) von den beiden anderen Gewindebereichen (29A, 29B) beabstandet am Längslenker (4) vorgesehen ist und in Fahrzeughochrichtung (y) zwischen den beiden anderen Gewindebereichen (29A, 29B) angeordnet ist.

7. Längslenkervorrichtung nach Anspruch 5 oder 6, **dadurch gekennzeichnet, dass** der Längslenker (4) eine weitere Aufnahme (30) aufweist, in dessen Bereich ein Hauptlager anordenbar ist.

8. Längslenkervorrichtung nach einem der Ansprüche 1 bis 7, **dadurch gekennzeichnet, dass** eine Verbindungseinrichtung (24) mit dem Längslenker (4) und/oder mit dem mittleren Gehäusebereich (9) verbunden ist, in deren Bereich eine Federeinrichtung (33) und/oder eine Dämpfereinrichtung (34) anbindbar ist.

9. Längslenkervorrichtung nach Anspruch 8, **dadurch gekennzeichnet, dass** die Verbindungseinrichtung (24) einen Koppelbereich (26) mit dem Längslenker (4) und/oder mit dem mittleren Gehäusebereich (9) sowie einen Verbindungsbereich (27, 28) aufweist, wobei im Verbindungsbereich (27, 28) die Federeinrichtung (33) und/oder die Dämpfereinrichtung (34) an der Verbindungseinrichtung (24) anbindbar ist.

10. Längslenkervorrichtung nach einem der Ansprüche 1 bis 9, **dadurch gekennzeichnet, dass** eine Ausgangswelle (17) einer elektrischen Maschine (6) des Antriebsstranges (8) im Bereich des Deckelelementes (14) mit einer Welle (18) eines Planetengetriebes (12) verbindbar und eine weitere Welle (16) des Planetengetriebes (12) durch eine Öffnung des Deckelelementes (14) hindurchführbar und auf der der elektrischen Maschine (6) abgewandten Seite des Deckelelementes (14) mit einer Stirnradstufe (13) der Getriebeeinrichtung (7) verbindbar ist.

11. Längslenkervorrichtung nach Anspruch 10, **dadurch gekennzeichnet, dass** zumindest eines der Stirnräder (13A) der Stirnradstufe (13) in einer Lageraufnahme (19) der Seitenwand (11) drehbar lagerbar ist.

12. Längslenkervorrichtung nach einem der Ansprüche 1 bis 11, **dadurch gekennzeichnet, dass** eine Radwelle (20) durch die Seitenwand (11) hindurch in den Gehäuseinnenraum (10) vorkragend montierbar ist.

13. Längslenkervorrichtung nach einem der Ansprüche 1 bis 12, **dadurch gekennzeichnet, dass** die Längslenkervorrichtung (1) zumindest bereichsweise als Schmiede- und/oder Gussteil ausgebildet ist.

14. Längslenkervorrichtung nach einem der Ansprüche 4 bis 13, **dadurch gekennzeichnet, dass** das weitere Deckelelement (22) wenigstens annähernd topfförmig ausgeführt ist.

15. Längslenkervorrichtung nach einem der Ansprüche 8 bis 14, **dadurch gekennzeichnet, dass** die Verbindungseinrichtung (24) einteilig mit dem Längslenker und/oder dem mittleren Gehäusebereich und/oder dem Deckelelement und/oder dem weiteren Deckelelement ausgebildet ist.

## Claims

1. Trailing arm apparatus (1) of a drivable torsion beam axle (2) having a housing (5), within which a drive train (8) can be arranged and which is connected to a trailing arm (4), **characterized in that**, on a side (R) which faces a wheel in the installed position in a vehicle, the housing (5) has a side wall (11) which is configured in one piece with a central housing region (9) and delimits a housing interior space (10) which receives the drive train (8) at least partially, whereas the housing interior space (10) is delimited on the side (A) which faces away from the wheel via at least one cover element (14) which can be connected releasably to the central housing region (9).

2. Trailing arm apparatus according to Claim 1, **characterized in that** the central housing region (9) and the trailing arm (4) are configured in one piece.

3. Trailing arm apparatus according to Claim 1 or 2, **characterized in that** the cover element (14) is configured as an intermediate plate with a receiving region (15), in which at least one part of a transmission device (7) of the drive train (8) can be arranged.

4. Trailing arm apparatus according to one of Claims 1 to 3, **characterized in that** a further cover element (22) which is connected releasably to the cover element (14) is provided on that side of the cover element (14) which faces away from the central housing region (9), in which further cover element (22) an electric machine (6) can be arranged at least partially.

5. Trailing arm apparatus according to one of Claims 1 to 4, **characterized in that** the trailing arm (4) has a receptacle, in the region of which the trailing arm (4) can be connected to a transverse profile of a torsion beam axle (2).

6. Trailing arm apparatus according to one of Claims 1 to 5, **characterized in that** the trailing arm (4) preferably has three threaded regions (29A to 29C) for connection to the transverse profile, of which two of the threaded regions (29A, 29B), in the installed position of the trailing arm (4) in a vehicle, are spaced apart from one another in the vehicle vertical direction (y) and are arranged substantially at least approximately above one another, whereas the third threaded region (29C) is provided on the trailing arm (4) in a manner which is spaced apart from the two other threaded regions (29A, 29B) in the vehicle longitudinal direction (x), and is arranged between the two other threaded regions (29A, 29B) in the vehicle vertical direction (y).

7. Trailing arm apparatus according to Claim 5 or 6, **characterized in that** the trailing arm (4) has a further receptacle (30), in the region of which a main bearing can be arranged.

8. Trailing arm apparatus according to one of Claims 1 to 7, **characterized in that** a connecting device (24) is connected to the trailing arm (4) and/or to the central housing region (9), in the region of which connecting device (24) a spring device (33) and/or a damper device (34) can be attached.

9. Trailing arm apparatus according to Claim 8, **characterized in that** the connecting device (24) has a coupling region (26) to the trailing arm (4) and/or to the central housing region (9), and a connecting region (27, 28), it being possible for the spring device (33) and/or the damper device (34) to be attached to the connecting device (24) in the connecting region (27, 28) .

10. Trailing arm apparatus according to one of Claims 1 to 9, **characterized in that** an output shaft (17) of an electric machine (6) of the drive train (8) can be connected in the region of the cover element (14) to a shaft (18) of a planetary transmission (12), and a further shaft (16) of the planetary transmission (12) can be guided through an opening of the cover element (14) and can be connected to a spur gear stage (13) of the transmission device (7) on that side of the cover element (14) which faces away from the electric machine (6) .

11. Trailing arm apparatus according to Claim 10, **characterized in that** one of the spur gears (13A) of the spur gear stage (13) can be mounted rotatably in a bearing seat (19) of the side wall (11).

12. Trailing arm apparatus according to one of Claims 1 to 11, **characterized in that** a wheel shaft (20) can be mounted so as to project through the side wall (11) into the housing interior space (10).

13. Trailing arm apparatus according to one of Claims 1 to 12, **characterized in that** the trailing arm apparatus (1) is configured at least in regions as a forged and/or cast part.

14. Trailing arm apparatus according to one of Claims 4 to 13, **characterized in that** the further cover element (22) is of at least approximately pot-shaped configuration.

15. Trailing arm apparatus according to one of Claims 8 to 14, **characterized in that** the connecting device (24) is configured in one piece with the trailing arm and/or the central housing region and/or the cover element and/or the further cover element.

## Revendications

1. Dispositif à bras oscillant longitudinal (1) d'un essieu à traverse déformable en torsion (2) pouvant être entraîné, comprenant un boîtier (5) à l'intérieur duquel peut être disposée une chaîne cinématique (8) et qui est connecté à un bras oscillant longitudinal (4), **caractérisé en ce que** le boîtier (5), sur un côté (R) tourné vers une roue dans la position d'installation dans un véhicule, présente une paroi latérale (11) réalisée d'une seule pièce avec une région de boîtier centrale (9) et délimitant un espace interne de boîtier (10) recevant au moins en partie la chaîne cinématique (8), tandis que l'espace interne de boîtier (10) est limité du côté (A) opposé à la roue par le biais d'au moins un élément de couvercle (14) pouvant être connecté de manière amovible à la région de boîtier centrale (9).

2. Dispositif à bras oscillant longitudinal selon la revendication 1, **caractérisé en ce que** la région de boîtier centrale (9) et le bras oscillant longitudinal (4) sont réalisés d'une seule pièce.

3. Dispositif à bras oscillant longitudinal selon la revendication 1 ou 2, **caractérisé en ce que** l'élément de couvercle (14) est réalisé sous forme de plaque intermédiaire avec une région de réception (15) dans laquelle peut être disposée au moins une partie d'un dispositif de transmission (7) de la chaîne cinématique (8).

4. Dispositif à bras oscillant longitudinal selon l'une quelconque des revendications 1 à 3, **caractérisé en ce que**, du côté de l'élément de couvercle (14) opposé à la région de boîtier centrale (9), est prévu un élément de couvercle supplémentaire (22) connecté de manière amovible à l'élément de couvercle (14), dans lequel peut être disposée au moins en partie une machine électrique (6) .

5. Dispositif à bras oscillant longitudinal selon l'une quelconque des revendications 1 à 4, **caractérisé en ce que** le bras oscillant longitudinal (4) présente un logement dans la région duquel le bras oscillant longitudinal (4) peut être connecté à un profilé transversal d'un essieu à traverse déformable en torsion (2).

6. Dispositif à bras oscillant longitudinal selon l'une quelconque des revendications 1 à 5, **caractérisé en ce que** le bras oscillant longitudinal (4) présente, pour la connexion au profilé transversal, de préférence trois régions filetées (29A à 29C), dont deux des régions filetées (29A, 29B), dans la position d'installation du bras oscillant longitudinal (4) dans un véhicule, sont disposées à distance l'une de l'autre dans la direction verticale du véhicule (y) et essentiellement au moins approximativement l'une au-dessus de l'autre, tandis que la troisième région filetée (29C) est prévue dans la direction longitudinale du véhicule (x) sur le bras oscillant longitudinal (4) à distance des deux autres régions filetées (29A, 29B) et est disposée dans la direction verticale du véhicule (y) entre les deux autres régions filetées (29A, 29B) .

7. Dispositif à bras oscillant longitudinal selon la revendication 5 ou 6, **caractérisé en ce que** le bras oscillant longitudinal (4) présente un logement supplémentaire (30) dans la région duquel peut être disposé un palier principal.

8. Dispositif à bras oscillant longitudinal selon l'une quelconque des revendications 1 à 7, **caractérisé en ce qu'**un dispositif de liaison (24) est connecté au bras oscillant longitudinal (4) et/ou à la région de boîtier centrale (9), dans la région de laquelle peut être attaché un dispositif de ressort (33) et/ou un dispositif d'amortissement (34).

9. Dispositif à bras oscillant longitudinal selon la revendication 8, **caractérisé en ce que** le dispositif de liaison (24) présente une région d'accouplement (26) avec le bras oscillant longitudinal (4) et/ou avec la région de boîtier centrale (9) ainsi qu'une région de liaison (27, 28), le dispositif de ressort (33) et/ou le dispositif d'amortissement (34) pouvant être attachés au dispositif de liaison (24) dans la région de liaison (27, 28).

10. Dispositif à bras oscillant longitudinal selon l'une quelconque des revendications 1 à 9, **caractérisé en ce qu'**un arbre de sortie (17) d'une machine électrique (6) de la chaîne cinématique (8) peut être connecté dans la région de l'élément de couvercle (14) à un arbre (18) d'une transmission planétaire (12) et un arbre supplémentaire (16) de la transmission planétaire (12) peut être guidé à travers une ouverture de l'élément de couvercle (14) et peut être connecté du côté de l'élément de couvercle (14) opposé à la machine électrique (6) à un étage à pignons droits (13) du dispositif de transmission (7).

11. Dispositif à bras oscillant longitudinal selon la revendication 10, **caractérisé en ce qu'**au moins l'un des pignons droits (13A) de l'étage à pignons droits (13) est supporté de manière rotative dans un logement de palier (19) de la paroi latérale (11).

12. Dispositif à bras oscillant longitudinal selon l'une quelconque des revendications 1 à 11, **caractérisé en ce qu'**un arbre de roue (20) peut être monté en saillie à travers la paroi latérale (11) dans l'espace interne de boîtier (10).

13. Dispositif à bras oscillant longitudinal selon l'une quelconque des revendications 1 à 12, **caractérisé en ce que** le dispositif à bras oscillant longitudinal (1) est réalisé au moins en partie sous forme de pièce forgée et/ou moulée.

14. Dispositif à bras oscillant longitudinal selon l'une quelconque des revendications 4 à 13, **caractérisé en ce que** l'élément de couvercle supplémentaire (22) est réalisé au moins approximativement en forme de pot.

15. Dispositif à bras oscillant longitudinal selon l'une quelconque des revendications 8 à 14, **caractérisé en ce que** le dispositif de liaison (24) est réalisé d'une seule pièce avec le bras oscillant longitudinal et/ou la région de boîtier centrale et/ou l'élément de couvercle et/ou l'élément de couvercle supplémentaire.
